# EUROPEAN PATENT SPECIFICATION

(11) **EP 3 038 890 B1**
(45) Date of publication and mention of the grant of the patent: **22.08.2018**
(21) Application number: 14839557.7
(22) Date of filing: 29.08.2014
(51) Int. Cl.: B62J 25/00

(54) **ADAPTIVE KNEE SUPPORT FOR MOTORCYCLE**
ADAPTIVE KNIESTÜTZE FÜR EIN MOTORRAD
SUPPORT DE GENOU ADAPTATIF POUR MOTOCYCLETTE

(30) Priority: 30.08.2013 LV 130124
(43) Date of publication of application: 06.07.2016
(73) Proprietor: Mundi, Maris Ralfs, 1050 Riga (LV)
(72) Inventor: Mundi, Maris Ralfs, 1050 Riga (LV)
(74) Representative: Kuzjukevica, Lucija
(86) International application number: PCT/IB2014/064139
(87) International publication number: WO 2015/028977

(56) References cited:
- CN-A- 86 106 509
- CN-Y- 2 653 913
- DE-A1- 2 744 838
- DE-A1- 10 306 677
- GB-A- 191 322 373
- JP-A- H11 310 176
- RU-C1- 2 030 318
- US-A1- 2006 197 307

## Description

### Technical Field

Invention relates to knee supports for supporting a knee of a motorcycle rider, especially to such knee supports, that are adaptively adjustable to the position of the knee of the motorcycle rider.

### Background Art

The prior art offers different solutions.

Japan patent No. 4132207 describes a knee support, especially a fastening mechanism by means of which the knee support is attached to the motorcycle. Given fastening mechanism provides a rotation of the knee support around its own axis, providing its adjustment according to a position of the rider's knee. Said invention does not provide adjustment of the support in the longitudinal direction and solutions, which could comfort the use of the support with the rider's knee.

UK patent application No. 2169502 describes a knee support for motorcycles, horses or wheelchairs. Similar device is described in Chine patent application No. 200710014324 (published under CN 101032986 A). In comparison to the previous devices, this device does not provide any adjustments.

None of known solutions do not provide a knee support, that would be a) especially made for racing (road racing), b) dynamically adjustable during the riding and/or by means of servomotors. In present on a road racing and a high performance road-going motorcycles the riders use the following solutions - a) abrasive stickers on a fuel tank to increase adhesion between a thigh (sometimes an elbow) and motorcycle, b) types and bandages on hands to prevent a swelling.

Given invention in comparison to the state of art is useful only for road racing motorcycles or for high performance road-going motorcycles.

It is not useful for motorcycle passengers (as it is described in Japan patent No. 4132207) nor for wheelchairs, horses, rollers nor for low performance motorcycles.

The Chinese patent application publication No. CN 86 106 509 discloses an adjustable knee support according to the preamble of claim 1, more precisely a knee supporting device that includes two supporting rods which are stretched out from the left side and right side of the supporting frame, a supporting pad keeping contact with the knee of the human body and being supported by one end of the supporting rod. The device is suitable for motorcycling, cycling and horse riding.

The Chinese patent utility model publication No. CN 2 653 913 discloses a kneepad for protecting the human knee in driving motorcycle. The kneepad comprises a concave hard shell, which is matched with the physical shapes of the knee in riding. The concave hard shell wraps the human knee. An elastic member is fixedly arranged outside the concave hard shell and is fixedly connected at the vehicle by the connecting device.

Great Britain patent publication No. 22373 discloses that knee-grips attached to the sides of the petrol tank of a motor-cycle are constructed of a series of flat leather or like strips put together and secured by metal rivets so as to form a block. The blocks are attached to the tank and frame by straps, which pass through holes in the blocks.

German patent application No. 27 44 838 discloses a leg protector for the motor cycle rider in case of impact. The motor cycle is fitted with knee rest protecting the lower leg and/or the knee of the rider who slides forward following a collision. The fixing of the protective device in form of an elongated cushion is carried on two struts bolted sidewise to the machine frame. The two struts are connected by a cross bar.

Aim of the invention is to develop a knee support that can be both statically and dynamically adjustable to the knee of the rider and to the properties of road/driving, especially adjusting its use in road racing and for riding high performance motorcycles. Basic aim is to reach optimal position and weight distribution of the rider on the motorcycle. It is hard to accomplish when riding modern sport or high performance road-going motorcycle, because an engine power and effectiveness of brakes allows to reach up to 1.0 - 1.5 G during acceleration and braking, therefore the rider needs to adjust his/her position on the motorcycle to get a support on it - usually as a support a fuel tank or/and handle bars are used.

Second aim of the invention is to relief the hands of the rider during braking, whereas an overall fatigue of the rider and the risk of carpal tunnel syndrome is lowered, development of swelling is prevented, and steering precision of the rider is increased. The invention can be used as well as in training process of a road or racing riding - rider-novice already in the beginning can choose the best suited position on the motorcycle.

State of art solution - aforementioned adhesives for increasing a grip between a thigh and a motorcycle - is not satisfactory, its effectiveness does not exceed damping of 0.2 - 0.3 G; the present invention depending on a speed or geometry of a motorcycle can reach a damping of 1.0 G or even more.

### Disclosure of Invention

Given aim is reached by developing an adaptive knee support according to claim 1. Said knee support comprises several inserts placed in row to each other and connected to each other by fastening means. At least the last insert or its surface that touches the rider knee is formed is such a way to be anatomically compatible with the shape of the knee of the respective rider.

Knee support is attachable to the motorcycle by means of the fastening mechanism. The fastening mechanism is adjustable: a) forward and backward with respect to the longitudinal direction of the motorcycle; or/and b) to the right or to the left and/or in the angle with respect to the longitudinal axis of the motorcycle; or/and c) up or down with respect to a seat plane of the motorcycle.

Above mentioned adjustment possibilities are very important, because they allow the rider to choose the most suitable position for riding the motorcycle and allow to solve anatomical differences of different riders, especially the differences of weight and length of hands/legs.

Adjustment possibilities are essential both a) in moto racing where it is necessary to make fast adjustments to the motorcycle between the rides and in high performance classes, where adjustments to the motorcycle are performed during the race as it is done with engine mapping regimes, or control of clutch and brake levers position; and b) in series manufacturing of road-going motorcycles, where it is necessary to install a fastening mechanism configured to adapt the knee support for different riders, because series motorcycles are not made individually for each rider. Given invention allows the rider intuitively simple to change a position of the knee support without interaction of an engineer.

Adaptive knee support can be statically adjustable i.e. when motorcycle is in stationary state, as well as dynamically adjustable i. e. when motorcycle is in motion by the means of the fastening mechanism.

Aim of dynamic knee support control is to reach an optimal rider position (and weight distribution) on the motorcycle without stopping with respect to the riding conditions and/or to the special features of corners of particular racing track.

Dynamic knee support control is realized on the basis of a) rider control actions (given signals) during a ride and/or b) on the basis of predetermined data. Option b) is more applicable in cases when motorcycle is used for driving on a racing track, wherein configuration does not change and is known before in difference to the road-going motorcycles.

Predetermined data can be selected from the following data groups: GPS data; triangulation data of the outer data points; engine mapping data; data about motorcycle inclination angle; data about a wheel rotation speed and speed difference; braking force data; suspension movement data and data from other sensors used in sport and road-going motorcycles; said data are transferred to the control mechanism/control unit of the adaptive knee support - separately or in different combinations.

### Brief Description of Figures in the Drawings

Invention is described in brief in the following drawings:
Fig. 1 shows a motorcycle **2** with a rider **3,** wherein in the proximity of the fuel tank a knee support **1** with an insert **10** is arranged.
Fig. 2 shows the knee support **1** provided with at least one insert **10,** wherein the knee support is attached to the motorcycle (not shown in the drawing) by means of a fastening mechanism **11.**

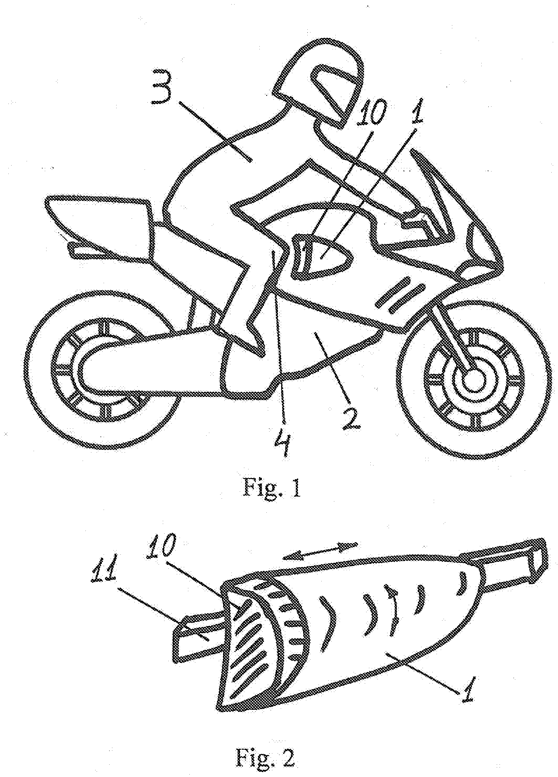

The best mode for carrying out the invention comprises positioning of a knee support **1** on a fuel tank of a motorcycle **2** near a knee **4** of a rider **3** (see Fig. 1). An insert **10** is provided on the knee support **1,** wherein the insert **10** is configured to ergonomically enclose the knee **4,** when the knee **4** of the rider **3** presses against the knee support **1.** Respectively, easing a stress on the rider's **3** knee **4** that is pressed against the knee support **1.**

Additionally, the knee support **1** is positioned at the fuel tank of the motorcycle **2** by means of a fastening mechanism **11** (see Fig. 2). The fastening mechanism **11** is configured to provide a displacement of knee support **1** in longitudinal direction, rotation around its axis, that is perpendicular to the longitudinal direction of the motorcycle and/or a displacement in height according to a plane of a motorcycle seat.. Said displacement is accomplished mechanically or by means of servo motors. Additionally, said servo motors can be connected to a control unit that comprises information about dynamical control of the knee support **1**, i.e., information or data for control of knee support **1** during the ride of the motorcycle **2.** Said data are selected from the following data groups: GPS data; triangulation data about the outer data points; engine mapping data; data about motorcycle inclination angle; wheel rotation speed and speed difference data; braking force data; suspension movement data and data from sensors used in different sport or road-riding motorcycles - or its combination. Use of such controllable fastening mechanism **11** ensures that knee support **1** is adaptively controllable during the ride significantly increasing ergonomics for rider **3** during extreme riding.

## Claims

1. Adaptive knee support (1) attachable to a motorcycle (2) in proximity of a rider (3) knee (4), wherein said knee support (1) comprises multiple, subsequently arranged inserts (10) that are connected to each other by fastening means and configured to support the rider knee (4) in the knee support (1) according to the rider's (3) intentions, wherein said knee support (1) is attachable to the motorcycle (2) by means of a fastening mechanism (11) and the fastening mechanism (11) is adjustable in a reciprocal manner or in the angle according to a longitudinal axis of the motorcycle (2), **characterized in that** said support (1) is dynamically adjustable by the means of the fastening mechanism (11) according to control information inserted by the rider (3) and/or on the basis of predetermined data, wherein the predetermined data are selected from the group of data as GPS data; triangulation data of outer data points; engine mapping data; data about an angle of attack of the motorcycle (2); suspension position data, wheel rotation speed and its speed difference data; braking force data; and data from other sensors used on sport or street motorcycles.

## Patentansprüche

1. Adaptive Kniestütze (1), die an einem Motorrad (2) in der Nähe des Knies (4) eines Fahrers (3) anbringbar ist, wobei die Kniestütze (1) mehrere, nacheinander angeordnete Einlagen (10) umfasst, die miteinander durch Befestigungsmittel verbunden und konfiguriert sind, das Fahrerknie (4) in der Kniestütze (1) gemäß den Absichten des Fahrers (3) zu stützen, wobei die Kniestütze (1) an dem Motorrad (2) mithilfe eines Befestigungsmechanismus (11) anbringbar ist und der Befestigungsmechanismus (11) auf reziproke Weise oder in dem Winkel gemäß einer Längsachse des Motorrads (2) verstellbar ist, **dadurch gekennzeichnet, dass** die Stütze (1) mittels des Befestigungsmechanismus (11) gemäß Steuerungsinformationen, die durch den Fahrer eingegeben wurden, und/oder auf Basis vorbestimmter Daten dynamisch verstellbar ist, wobei die vorbestimmten Daten aus der folgenden Gruppe von Daten ausgewählt sind: GPS-Daten; Triangulationsdaten äußerer Datenpunkte; Motorabbildungsdaten; Daten über einen Angriffswinkel des Motorrads (2); Aufhängungspositionsdaten, Raddrehzahlen- und die entsprechenden Drehzahldifferenzdaten; Bremskraftdaten; und Daten von anderen Sensoren, die auf Sport- und Verkehrsmotorrädern verwendet werden.

## Revendications

1. Support de genou (1) adaptatif pouvant être attaché à un motocycle (2) à proximité du genou (4) de motocycliste (3), dans lequel ledit support de genou (1) comprend de multiples inserts agencés ultérieurement (10) qui sont raccordés les uns aux autres par des moyens de fixation et configurés pour supporter le genou (4) de motocycliste dans le support de genou (1) selon les intentions du motocycliste (3), dans lequel ledit support de genou (1) peut être attaché au motocycle (2) au moyen d'un mécanisme de fixation (11) et le mécanisme de fixation (11) est réglable de manière réciproque ou dans l'angle selon un axe longitudinal du motocycle (2), **caractérisé en ce que** ledit support (1) est réglage dynamiquement au moyen du mécanisme de fixation (11) selon des informations de commande insérées par le motocycliste (3) et/ou sur la base de données prédéterminées, dans lequel les données prédéterminées sont sélectionnées dans le groupe de données telles que des données GPS ; des données de triangulation de points de données extérieures; des données de mappage de moteur; des données concernant un angle d'attaque du motocycle (2) ; des données de position de suspension, des données de vitesse de rotation de roue et de différence de sa vitesse ; des données de force de freinage ; et des données provenant d'autres capteurs utilisés sur des motocycles de sport ou de route.
